# EUROPEAN PATENT APPLICATION

(11) **EP 3 260 682 A1**
(43) Date of publication of application: **27.12.2017**
(21) Application number: 16752226.7
(22) Date of filing: 27.01.2016
(51) Int. Cl.: F02B 39/10, F02B 37/10, F02B 39/16, F02B 39/00, F04D 29/58, H02K 11/33

(54) **ELECTRIC SUPERCHARGER**

(30) Priority: 19.02.2015 JP 2015030687
(71) Applicant: Kabushiki Kaisha Toyota Jidoshokki, Kariya-shi, Aichi 448-8671 (JP)
(72) Inventor: FUJIKI, Yutaka, Kariya-shi Aichi 448-8671 (JP); UMEMURA, Satoshi, Kariya-shi Aichi 448-8671 (JP); UETSUJI, Kiyoshi, Kariya-shi Aichi 448-8671 (JP); OSHITA, Makio, Kariya-shi Aichi 448-8671 (JP); YAMAMICHI, Toshihiro, Kariya-shi Aichi 448-8671 (JP)
(74) Representative: Winter, Brandl, Fürniss, Hübner, Röss, Kaiser, Polte - Partnerschaft mbB
(86) International application number: PCT/JP2016/052384
(87) International publication number: WO 2016/132837

(57) **Abstract**

An electric supercharger includes an electric motor, a motor housing, a drive circuit, a circuit housing, and a compressing portion. The circuit housing includes an accommodating wall having a shape projecting from an outer surface of the motor housing, and a bottom located at a distal end in the projecting direction of the accommodating wall. The circuit housing together with the motor housing, hermetically confines the drive circuit. The bottom includes a heat release portion that faces the outer side of the circuit housing. The drive circuit is thermally coupled to an inner surface of the heat release portion that faces the inner side of circuit housing.

## Description

### TECHNICAL FIELD

The present invention relates to an electric supercharger that has an electric motor, a motor housing, a drive circuit, a circuit housing, and a compressing portion.

### BACKGROUND ART

A technique of arranging an electric supercharger in an intake passage to increase the output of an internal combustion engine is known. The electric supercharger includes a compressing portion that compresses air, an electric motor that drives the compressing portion, and a drive circuit that controls driving of the electric motor.

To drive the electric motor, the drive circuit (an inverter) must be controlled at a super-high speed. Since typical vehicle voltage is low, a large electric current is necessary to control the drive circuit at a super-high speed. When the drive circuit is continuously operated in a high revolution state using a large electric current, loss in the semiconductor elements and loss by interconnection resistance are large in the drive circuit. This increases the temperature of the drive circuit. Patent Document 1, for example, discloses an electric supercharger that cools the drive circuit to restrain temperature increase of the drive circuit.

As shown in Fig. 3, an electric supercharger 80 of Patent Document 1 includes a compressor 81, an electric motor 82, which drives the compressor 81, and an inverter unit 83 serving as a drive circuit that controls driving of the electric motor 82. The compressor 81, the electric motor 82, and the inverter unit 83 are aligned in the axial direction of a rotor shaft 82a. The electric motor 82 is accommodated in a motor housing 84. The direction in which the axis of the rotor shaft 82a extends is defined as the axial direction of the motor housing 84. The motor housing 84 includes a gas supply port 84a in a wall that faces the inverter unit 83 and a gas discharge port 84b in a wall close to the compressor 81.

The electric supercharger 80 also includes a cooling passage 85. The cooling passage 85 allows communication between the gas supply port 84a and the gas discharge port 84b in the motor housing 84. The electric supercharger 80 includes a suction passage 87, which couples the gas discharge port 84b to a suction port 81a of the compressor 81.

The inverter unit 83 is received in an inverter housing 86, which is a circuit housing. The inverter housing 86 is attached to the end of the motor housing 84 that has the gas supply port 84a. An element circuit board 88 of the inverter unit 83 includes multiple air communication holes 88a, which are arranged at positions opposed to the gas supply port 84a. The inverter housing 86 includes multiple openings 86a, which are arranged at positions opposed to the gas supply port 84a.

The compressor 81 is driven to apply negative pressure to the cooling passage 85 via the suction passage 87. This introduces atmospheric air into the gas supply port 84a through the openings 86a of the inverter housing 86 and the air communication holes 88a of the element circuit board 88. The atmospheric air is thus introduced into the cooling passage 85. At this time, the atmospheric air is also introduced to the vicinity of the element circuit board 88. The inverter unit 83 is thus cooled by the atmospheric air.

### PRIOR ART DOCUMENT

### Patent Document

Patent Document 1: Japanese Laid-Open Patent Publication No. 2013-24041

### SUMMARY OF THE INVENTION

### Problems that the Invention is to Solve

In the electric supercharger 80 disclosed in Patent Document 1, the inverter housing 86 has the openings 86a, through which the atmospheric air is introduced into the inverter housing 86, to cool the inverter unit 83. The electric supercharger 80 is typically mounted in the engine compartment of a vehicle, together with the engine. Foreign matter such as water or dust enters the engine compartment. As a result, the foreign matter enters the interior of the inverter housing 86 through the openings 86a of the inverter housing 86.

Accordingly, it is an objective of the present invention to provide an electric supercharger capable of restraining temperature increase of the drive circuit while restraining entry of foreign matter into the circuit housing.

### Means for Solving the Problems

To achieve the foregoing objective and in accordance with one aspect of the present invention, an electric supercharger is provided that includes an electric motor, a motor housing that accommodates the electric motor, a drive circuit that drives the electric motor, a circuit housing that accommodates the drive circuit, and a compressing portion that is driven by the electric motor. The circuit housing includes an accommodating wall that has a shape projecting from an outer surface of the motor housing, and a bottom that is located at a distal end in a projecting direction of the accommodating wall. The circuit housing, together with the motor housing, hermetically confines the drive circuit. The bottom includes a heat release portion that faces an outer side of the circuit housing. The drive circuit is thermally coupled to an inner surface of the heat release portion that faces an inner side of the circuit housing.

### BRIEF DESCRIPTION OF THE DRAWINGS

Fig. 1 is a cross-sectional view showing an electric supercharger according to one embodiment.
Fig. 2 is an exploded perspective view showing a motor housing and a circuit housing.
Fig. 3 is a cross-sectional view showing the electric supercharger in the BACKGROUND ART section.

### MODES FOR CARRYING OUT THE INVENTION

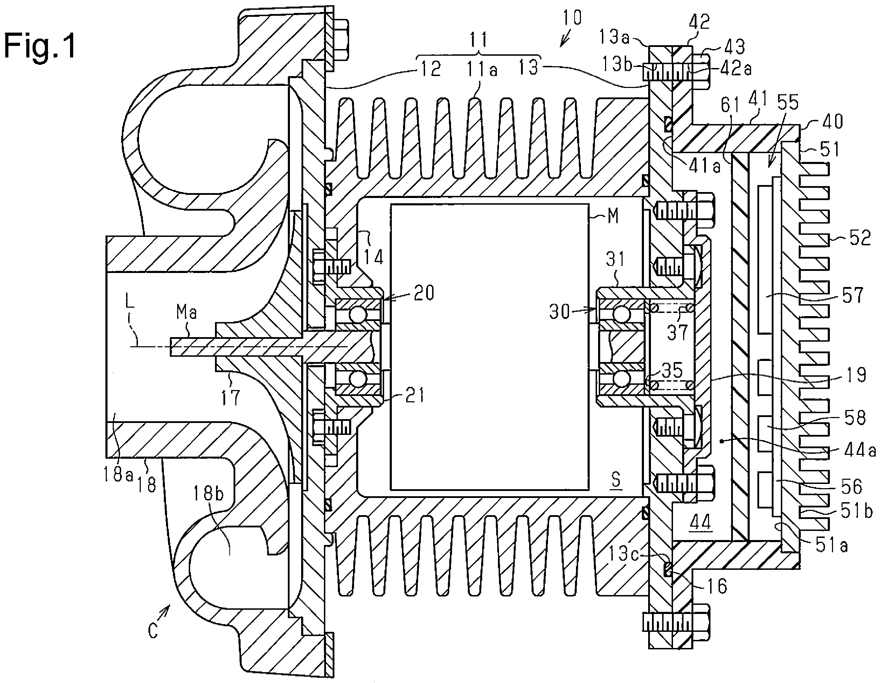

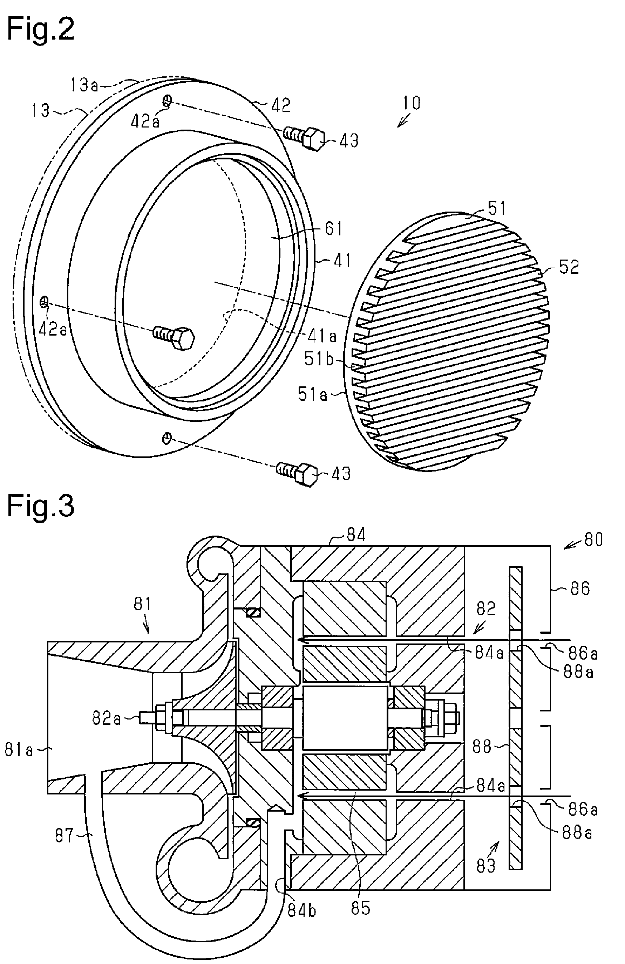

An electric supercharger according to one embodiment will now be described with reference to Figs. 1 and 2.

An electric supercharger according to the present embodiment is mounted in the engine compartment of a vehicle, compresses air, and supplies the compressed air to the engine (not shown).

As shown in Fig. 1, the electric supercharger 10 includes a tubular metal motor housing 11. The motor housing 11 includes a tubular housing body 11a, a disk-shaped first seal plate 12, and a disk-shaped second seal plate 13. The first seal plate 12 is fixed to an end in the axial direction of the housing body 11a. The second seal plate 13 is fixed to the opposite end in the axial direction of the housing body 11a. The motor housing 11 includes a motor accommodating space S, which is surrounded by the housing body 11a, the first seal plate 12, and the second seal plate 13. An electric motor M is accommodated in the motor accommodating space S. The motor accommodating space S is sealed by the first seal plate 12 and the second seal plate 13.

The housing body 11a includes a bearing support portion 14 in an end that faces the first seal plate 12. The bearing support portion 14 supports a fixed bearing case 21, which supports a fixed bearing 20. The second seal plate 13 supports a movable bearing case 31, which supports a movable bearing 30.

A shaft Ma of the electric motor M is rotationally supported by the fixed bearing 20 on one side in the axial direction. The shaft Ma of the electric motor M is rotationally supported by the movable bearing 30 on the opposite side in the axial direction. A preload spring 37 is received in the movable bearing case 31. An end in the axial direction of the preload spring 37 contacts the movable bearing 30 through a rotation stopper member 35. The opposite end in the axial direction of the preload spring 37 contacts the inner surface of a cover 19, which is fixed to the second seal plate 13. The preload spring 37 is arranged between the rotation stopper member 35 and the cover 19 in an axially compressed state. The force acting to restore the original shape of the compressed preload spring 37 applies load to the movable bearing 30.

The load applied by the preload spring 37 to the movable bearing 30 is transferred to the shaft Ma through the movable bearing 30 and then to the fixed bearing 20 through the shaft Ma. The preload spring 37 thus preloads the fixed bearing 20. An impeller 17 is fixed to an end of the shaft Ma projecting from the first seal plate 12.

The electric supercharger 10 includes a metal compressor housing 18. The compressor housing 18 is attached to the first seal plate 12. A gas intake port 18a for drawing in gas is arranged in the compressor housing 18. A volute scroll passage 18b is provided about the impeller 17 at a position between the compressor housing 18 and the first seal plate 12. The gas drawn into the compressor housing 18 through the gas intake port 18a is introduced into the scroll passage 18b by rotation of the impeller 17 and supplied to the engine in a compressed state. That is, the electric supercharger 10 includes a compressing portion C, which is configured by the shaft Ma, the impeller 17, and the compressor housing 18.

The electric supercharger 10 includes a circuit housing 40. The direction in which the axis L of the shaft Ma extends is defined as the axial direction of the electric supercharger 10. In the electric supercharger 10, the compressor housing 18, the motor housing 11, and the circuit housing 40 are aligned in this order from one side to the other in the axial direction.

The circuit housing 40 is fixed to the second seal plate 13 in the motor housing 11. The circuit housing 40 has a cylindrical shape that has a closed and opens to the second seal plate 13. The circuit housing 40 includes a cylindrical accommodating wall 41 and a bottom 51, which is located at the distal end in the projecting direction of the accommodating wall 41 from the outer surface of the second seal plate 13. The accommodating wall 41 has a shape that projects from the outer surface of the second seal plate 13 in the axial direction of the electric supercharger 10. The bottom 51 is located at the distal end in the projecting direction of the accommodating wall 41. More preferably, the circuit housing 40 includes a heat insulating plate 61, which is integrated with the inner side of the accommodating wall 41.

The accommodating wall 41 has a cylindrical shape and is made of plastic. The accommodating wall 41 opens to the second seal plate 13. The accommodating wall 41 has an attachment flange 42 in a manner surrounding the opening to the second seal plate 13. The attachment flange 42 of the accommodating wall 41 includes an opening end surface 41a in the end surface that surrounds the opening to the second seal plate 13.

As shown in Figs. 1 and 2, the attachment flange 42 extends over the entire circumference of the accommodating wall 41. The attachment flange 42 includes multiple bolt insertion holes 42a. The second seal plate 13 includes a flange 13a opposed to the bolt insertion holes 42a of the attachment flange 42. The flange includes multiple internal threaded holes 13b. Bolts 43 are inserted through the bolt insertion holes 42a of the attachment flange 42 are threaded into the internal threaded holes 13b of the flange 13a. The circuit housing 40 is thus fixed to the motor housing 11.

As shown in Fig. 1, the second seal plate 13 includes an annular recess 13c at a position opposed to the opening end surface 41a of the accommodating wall 41. A seal member 16, which is an O-ring, is mounted in the annular recess 13c. The seal member 16 is held in tight contact with the opening end surface 41a of the accommodating wall 41 and the inner surface of the annular recess 13c. The seal member 16 seals the boundary between the accommodating wall 41 and the second seal plate 13. The electric supercharger 10 includes an accommodating space 44, which is surrounded by the second seal plate 13 and the circuit housing 40. The accommodating space 44 is tightly sealed by the second seal plate 13, the circuit housing 40, and the seal member 16.

The bottom 51 is made of aluminum (metal). In the present embodiment, the bottom 51 corresponds to a heat release portion. The bottom 51 has a disk-like shape and is integrated with the distal end of the accommodating wall 41. Specifically, the bottom 51 is integrated with the accommodating wall 41 by insert molding at the time the accommodating wall 41 is molded. By integrating the bottom 51 and the accommodating wall 41 with each other, the circuit housing 40 has a cylindrical shape with a closed end. The bottom 51 includes an inner surface 51a on the surface that faces the inner side of the circuit housing 40 and an outer surface 51b on the surface that faces the outer side of the circuit housing 40. The inner surface 51a of the bottom 51 is exposed to the accommodating space 44. The outer surface 51b of the bottom 51 is exposed to the exterior of the circuit housing 40 and to the atmospheric air.

A drive circuit 55, which drives the electric motor M, is attached to the inner surface 51a of the bottom 51. The drive circuit 55 includes a circuit board 56, a power module 57, and an electronic device 58. The power module 57 and the electronic device 58 are electrically connected to the circuit board 56. The circuit board 56 of the drive circuit 55 is secured to the inner surface 51a of the bottom 51 using screws via thermal grease (not shown). The drive circuit 55 is thus thermally coupled to the bottom 51 via the thermal grease. The drive circuit 55 is arranged at a position closer to the bottom 51 than the electric motor M and the motor housing 11 in the axial direction of the electric supercharger 10. That is, the drive circuit 55 is arranged at a position closer to the atmospheric air than the electric motor M and the motor housing 11 in the axial direction of the electric supercharger 10. The circuit housing 40 includes multiple heat release fins 52 on the outer surface 51b of the bottom 51. The heat release fins 52 each have a plate-like shape and are spaced apart at equal intervals on the outer surface 51b. Each of the heat release fins 52 corresponds to a heat release portion.

The heat insulating plate 61 is arranged between the bottom 51 and the second seal plate 13 in the axial direction of the electric supercharger 10. The heat insulating plate 61 is made of plastic and has a disk-like shape. The heat insulating plate 61 is fitted to the accommodating wall 41. The heat insulating plate 61 divides the accommodating space 44 into two spaces. The heat insulating plate 61 functions as a heat insulating layer that restrains the heat radiated by the motor housing 11 from reaching the drive circuit 55. There is space as a part of the accommodating space 44 between the second seal plate 13 and the heat insulating plate 61 in the axial direction of the electric supercharger 10. The space functions as a heat insulating air layer 44a.

Operation of the electric supercharger 10 will now be described.

In the electric supercharger 10, the drive circuit 55 is controlled to control driving of the electric motor M. As the electric motor M is driven, the shaft Ma is rotated, together with the impeller 17, in correspondence with driving of the electric motor M. This drives the compressing portion C. When the electric supercharger 10 is driven, the drive circuit 55 is controlled at a super-high speed and thus needs a large electric current. At the time the drive circuit 55 is continuously operated in a high revolution state using a large electric current, the temperature of the drive circuit 55 increases. The heat produced by the drive circuit 55 is transferred to the bottom 51 through the thermal grease. The heat transferred to the bottom 51 is then released to the atmospheric air from the heat release fins 52.

The above-described embodiment achieves the following advantages.
(1) The electric supercharger 10 includes the circuit housing 40, in which the drive circuit 55 is hermetically confined. The circuit housing 40 is fixed to the second seal plate 13 of the motor housing 11 and hermetically confines the drive circuit 55 inside the circuit housing 40. This restrains entry of foreign matter such as water or dust into the circuit housing 40. In the configuration in which the drive circuit 55 is hermetically confined inside the circuit housing 40, the drive circuit 55 is thermally coupled to the bottom 51, which is located at the farthest position from the motor housing 11 in the circuit housing 40 and functions as a heat release portion. This hampers heat transfer from the motor housing 11 to the drive circuit 55. The heat produced by the drive circuit 55 is thus released to the atmospheric air through the bottom 51. As a result, temperature increase of the drive circuit 55 is restrained.
(2) In the circuit housing 40, the bottom 51, which is thermally coupled to the drive circuit 55, is made of metal. As a result, compared with a case in which the bottom 51 is made of plastic, the heat produced by the drive circuit 55 is efficiently transferred to the bottom 51 and released to the atmospheric air from the bottom 51. This improves heat release performance of the drive circuit 55 and restrains temperature increase of the drive circuit 55.
(3) The accommodating wall 41 of the circuit housing 40 is made of plastic. As a result, although the heat produced by the electric motor M is transferred to the motor housing 11, the accommodating wall 41, which is made of plastic, hampers heat transfer from the motor housing 11 to the circuit housing 40. This hampers heat transfer from the motor housing 11 to the drive circuit 55 through the accommodating wall 41, thus restraining temperature increase of the drive circuit 55.
(4) The circuit housing 40 includes the heat insulating plate 61, which is arranged between the second seal plate 13 of the motor housing 11 and the drive circuit 55 in the axial direction of the electric supercharger 10. The heat insulating plate 61 divides the accommodating space 44 into a space closer to the motor housing 11 and a space closer to the bottom 51. The heat insulating plate 61 restrains transfer of the heat radiated by the motor housing 11 to the drive circuit 55.
(5) The electric supercharger 10 has a configuration in which the electric motor M and the drive circuit 55 are integrated with each other. This reduces the size of the space for installing the electric supercharger 10 compared with a case in which the electric motor M and the drive circuit 55 are arranged independently from each other in the engine compartment. This also makes it unnecessary to route wires of the drive circuit 55 in the engine compartment, thus reducing the wiring loss and the noise caused by the wires.
(6) The circuit housing 40 includes the heat release fins 52 in the bottom 51. The heat release fins 52 thus increase the surface area of the outer surface 51b of the bottom 51, improving the efficiency by which the heat transferred from the drive circuit 55 to the bottom 51 is released to the atmospheric air. As a result, temperature increase of the drive circuit 55 is further restrained compared with a case that lacks the heat release fins 52.
(7) The seal member 16 is mounted in the second seal plate 13 of the motor housing 11 and held in tight contact with the opening end surface 41a of the circuit housing 40. The facing surfaces between the circuit housing 40 and the second seal plate 13 are thus sealed by the seal member 16. This restrains entry of foreign matter through between the facing surfaces with respect to the accommodating space 44.
(8) The accommodating space 44 in the circuit housing 40 is divided into the two spaces by the heat insulating plate 61. As a result, there is a space between the second seal plate 13 and the heat insulating plate 61, and the space is used as the heat insulating air layer 44a. Using the heat insulating air layer 44a and the heat insulating plate 61 in combination, transfer of the heat radiated by the electric motor M to the drive circuit 55 is hampered. As a result, temperature increase of the drive circuit 55 is restrained.
(9) The accommodating wall 41 of the circuit housing 40 is made of plastic, and only the bottom 51 is made of metal. This reduces the weight of the circuit housing 40 compared with a case in which the accommodating wall 41 is also made of metal.
(10) In the circuit housing 40, the bottom 51 is integrated with the accommodating wall 41 by insert molding. This restrains entry of foreign matter through the joint portion between the accommodating wall 41 and the bottom 51.

The above embodiment may be modified as follows.

In the present embodiment, the circuit housing 40 as a whole is a body independent from the motor housing 11. However, the present invention is not restricted to this. For example, a tubular accommodating wall may be formed integrally with the second seal plate 13 of the motor housing 11. In this case, the accommodating wall is made of metal. A bottom is then attached to the accommodating wall, which is integral with the second seal plate 13. The accommodating wall, which is integral with the second seal plate 13, and the bottom attached to the accommodating wall may configure a circuit housing. In this case, the bottom may be made of either metal or plastic.

The heat release fins 52, which are arranged in the bottom 51, do not have to have a plate-like shape, but may be formed as a corrugated fin shape, a sine wave shape, a zigzag shape, or a waveform shape.

To improve the heat release performance of the bottom 51, the outer surface 51b may have an uneven shape so that the surface area of the outer surface 51b is increased.

The outer surface 51b of the bottom 51 may lack the heat release fins 52 and be formed as a flat surface.

In the present embodiment, the heat insulating plate 61 serving as a heat insulating layer is arranged between the second seal plate 13 and the drive circuit 55. However, the heat insulating layer is not restricted to this. For example, the drive circuit 55, which is thermally coupled to the inner surface 51a of the bottom 51, may be subjected to plastic molding and embedded in the circuit housing 40. The plastic used in such plastic molding may be arranged between the second seal plate 13 and the drive circuit 55 as the heat insulating layer in the axial direction of the electric supercharger 10.

The material of the heat insulating plate 61 may be changed from plastic to rubber, ceramic, or the like in a manner suitable for heat insulation. Alternatively, the heat insulating plate 61 may be omitted.

In the circuit housing 40, the accommodating wall 41 and the bottom 51 may both be made of metal.

In the circuit housing 40, the accommodating wall 41 and the bottom 51 may both be made of plastic.

The bottom 51 may be made of a metal that is not aluminum.

In the embodiment, the bottom 51 as a whole is formed by a metal plate and the bottom 51 is used also as a heat release portion. However, a metal heat release portion may be arranged in a section of the bottom of the circuit housing 40, and the heat release portion and the drive circuit 55 may be thermally coupled to each other.

Although the circuit board 56 of the drive circuit 55 is held in contact with and thermally coupled to the bottom 51, the invention is not restricted to this. The power module 57 of the drive circuit 55 may be held in contact with and thermally coupled to the bottom 51.

Although the circuit housing 40 is arranged in the form projecting from the outer surface of the motor housing 11 in the axial direction of the electric supercharger 10, the invention is not restricted to this. The circuit housing 40 may be arranged in a form projecting from the outer peripheral surface of the motor housing 11 in the radial direction of the motor housing 11.

The drive circuit 55 may be attached to the bottom 51 without applying the thermal grease between the inner surface 51a of the bottom 51 and the circuit board 56.

In the circuit housing 40, the bottom 51 and the accommodating wall 41 may be integrated with each other in a manner other than insert molding. For example, while sealing the joint portion between the bottom 51 and the accommodating wall 41, the bottom 51 and the accommodating wall 41 may be bonded with each other or secured to each other using screws.

## Claims

1. An electric supercharger comprising:
an electric motor;
a motor housing that accommodates the electric motor;
a drive circuit that drives the electric motor;
a circuit housing that accommodates the drive circuit; and
a compressing portion that is driven by the electric motor, wherein
the circuit housing includes
an accommodating wall that has a shape projecting from an outer surface of the motor housing, and
a bottom that is located at a distal end in a projecting direction of the accommodating wall,
wherein the circuit housing, together with the motor housing, hermetically confines the drive circuit,
the bottom includes a heat release portion that faces an outer side of the circuit housing, and
the drive circuit is thermally coupled to an inner surface of the heat release portion that faces an inner side of the circuit housing.

2. The electric supercharger according to claim 1, wherein the heat release portion is made of metal.

3. The electric supercharger according to claim 1 or 2, wherein the accommodating wall is made of plastic.

4. The electric supercharger according to any one of claims 1 to 3, further comprising a heat insulating layer that is arranged between the motor housing and the drive circuit.

5. The electric supercharger according to any one of claims 1 to 4, wherein the heat release portion has a heat release fin on an outer surface that faces an outer side of the circuit housing.
